(19) Europäisches Patentamt
European Patent Office
Office européen des brevets

(11) EP 0 925 328 B1

(12) EUROPÄISCHE PATENTSCHRIFT

(45) Veröffentlichungstag und Bekanntmachung des Hinweises auf die Patenterteilung:
**25.10.2000 Patentblatt 2000/43**

(21) Anmeldenummer: **97941972.8**

(22) Anmeldetag: **29.08.1997**

(51) Int Cl.[7]: **C08K 5/5357**, C08K 13/00, C08L 25/02, C08L 67/00, C08L 71/12, C08L 77/00

(86) Internationale Anmeldenummer:
**PCT/EP97/04708**

(87) Internationale Veröffentlichungsnummer:
**WO 98/11160 (19.03.1998 Gazette 1998/11)**

(54) **FLAMMGESCHÜTZTE THERMOPLASTISCHE FORMMASSEN**

FLAME-PROOF THERMOPLASTIC MOULDING MATERIALS

MATIERES DE MOULAGE THERMOPLASTIQUES IGNIFUGEES

(84) Benannte Vertragsstaaten:
**AT BE CH DE ES FR GB IE IT LI LU NL**

(30) Priorität: **13.09.1996 DE 19637368**

(43) Veröffentlichungstag der Anmeldung:
**30.06.1999 Patentblatt 1999/26**

(73) Patentinhaber: **BASF AKTIENGESELLSCHAFT**
**67056 Ludwigshafen (DE)**

(72) Erfinder:
- **KLATT, Martin**
  **D-68165 Mannheim (DE)**
- **HEITZ, Thomas**
  **D-67125 Dannstadt-Schauernheim (DE)**
- **GAREISS, Brigitte**
  **D-67271 Obersülzen (DE)**

(56) Entgegenhaltungen:
**EP-A- 0 075 863**
**EP-A- 0 149 813**
**EP-A- 0 192 154**
**EP-A- 0 309 907**
**EP-A- 0 659 836**
**WO-A-93/18914**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft thermoplastische Formmassen, enthaltend

A) 5 bis 97 Gew.-% eines thermoplastischen Polymeren ausgewählt aus der Gruppe der Polyamide, Polyester, Polyphenylenether, vinylaromatischen Polymeren oder deren Mischungen,

B) 1 bis 30 Gew.-% einer Alkylphosphonsäureverbindung der Formel I

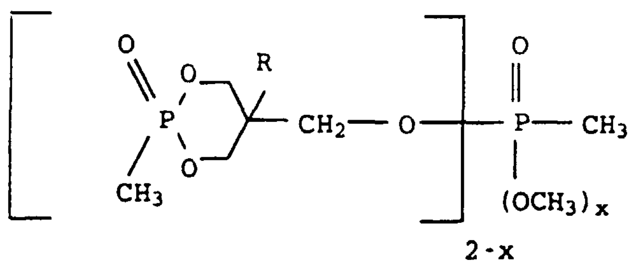

I

wobei R einen Alkylrest mit 1 bis 4 C-Atomen und x 0 oder 1 bedeutet,

C) 1 bis 30 Gew.-% eines Synergisten für B) ausgewählt aus der Gruppe der anorganischen Calcium- oder Magnesiumverbindungen oder deren Mischungen,

D) 1 bis 50 Gew.-% eines faserförmigen Füllstoffes und

E) 0 bis 40 Gew.-% weiterer Zusatzstoffe und Verarbeitungshilfsmittel,

wobei die Gewichtsprozente der Komponenten A) bis E) jeweils 100 % ergeben.

Weiterhin betrifft die Erfindung die Verwendung der erfindungsgemäßen thermoplastischen Formmassen zur Herstellung von Formkörpern jeglicher Art und die hierbei erhältlichen Formkörper.

Halogenhaltige flammgeschützte Thermoplaste sind neben anderen Nachteilen toxikologisch bedenklich und werden in zunehmendem Maße durch halogenfreie flammgeschützte Thermoplaste ersetzt.

Wesentliche Anforderungen für derartige Flammschutzmittelsysteme sind insbesondere eine helle Eigenfarbe, ausreichende Temperaturstabilität bei der Einarbeitung in den Thermoplasten sdwie der Erhalt der Wirksamkeit bei Zusatz von faserförmigen Füllstoffen i (sog. Dochteffekt bei Glasfasern), welcher die Flammschutzwirkung negativ beeinflußt.

Neben rotem Phosphor enthaltenden Thermoplasten kommen vier weitere halogenfreie Flammschutzmittel in Betracht.

1. Anorganische Flammschutzmittel auf Basis von Hydroxiden oder Carbonaten, insbesondere des Magnesiums, welche in hohen Mengen eingesetzt werden müssen, um ausreichend wirksam zu sein;

2. Stickstoffhaltige Flammschutzmittel wie Melamincyanurat, welches meist nur in unverstärkten Thermoplasten ausreichenden Flammschutz zeigen;

3. Phosphorverbindungen, wie Triphenylphospinoxid als Flammschutzmittel, die in vielen Thermoplasten den unerwünschten Nebeneffekt eines Weichmachers zeigen;

4. Ammoniumpolyphosphate oder Melaminphosphat, welche bei Temperaturen oberhalb von 200°C keine ausreichende Thermostabilität besitzen.

Alkylphosphonsäureverbindungen und ihre Wirkung als Flammschutzmittel in Thermoplasten sind bekannt aus der US 3 789 091, DE-A 44 41 022 und DE-A 44 06 857. Aus den beiden deutschen Schriften kann der Fachmann entnehmen, daß für unverstärkte transparente (amorphe) Polyamide oder deren Mischungen mit teilkristallinen Polyamiden ein Zusatz von Alkylphosphonsäureverbindung einen guten Flammschutz aufweisen (Klasse V-O nach UL 94) und derartige Polyamide mit Zusatzstoffen ausgerüstet werden können.

Wünschenswert wäre jedoch ein flammgeschütztes teilkristallines PA-Produkt ohne Zusatz von amorphen Polyamiden, da durch diese Polyamide die Chemikalienbeständigkeit und die Wärmeformbeständigkeit verringert wird. Für glasfaserverstärkte Polyamide ist die Wirksamkeit der Alkylphosphonsäureverbindungen nicht ausreichend, da lediglich eine Klassifizierung V-2 nach UL 94 unter brennendem Abtropfen der Proben erreicht wird.

Eine Erhöhung der Menge an Phosphonsäureverbindung ist nicht empfehlenswert, da das Additiv bei der Verarbeitung ausschwitzt (Formbelag) und die mechanischen Eigenschaften sehr nachteilig beeinflußt werden (Weichmachereigenschaft der Phosphorverbindung).

Der vorliegenden Erfindung lag daher die Aufgabe zugrunde, ein geeignetes Flammschutzmittel auf halogenfreier Basis für verstärkte Polyamide, Polyester oder PPE sowie vinylaromatischen Polymeren zur Verfügung zu stellen, welches eine gute Flammschutzwirkung mit ausreichender Krustenbildung zeigt und nicht brennend abtropft.

Demgemäß wurden die eingangs definierten Formmassen gefunden. Bevorzugte Ausführungsformen sind den Unteransprüchen zu entnehmen.

Überraschenderweise führt die Zugabe von anorganischen Magnesium- und/oder Calciumverbindungen und Alkylphosphonsäureverbindungen zu einem synergistischen Effekt der Flammschutzwirkung in verstärkten Thermoplasten wie Polyestern, Polyamiden, insbesondere teilkristallinen Polyamiden, PPE sowie vinylaromatischen Polymeren oder deren Mischungen. Es wird die Klassifizierung V-O nach UL 94 durch die erfindungsgemäße Kombination erreicht, wobei die Proben nicht brennend abtropfen.

Als Komponente A) enthalten die erfindungsgemäßen Formmassen 5 bis 97, vorzugsweise 10 bis 93 und insbesondere 30 bis 80 Gew.-% eines thermoplastischen Polymeren ausgewählt aus der Gruppe der Polyamide, Polyester, Polyphenylenether, vinylaromatischen Polymeren oder deren Mischungen.

1. Polycarbonate und Polyester

Geeignete Polycarbonate (oft auch als aromatische Polyester bezeichnet) sind an sich bekannt. Sie sind z. B. entsprechend den Verfahren der DE-B-1 300 266 durch Grenzflächenpolykondensation oder gemäß dem Verfahren der DE-A-14 95 730 durch Umsetzung von Biphenylcarbonat mit Bisphenolen erhältlich. Bevorzugtes Bisphenol ist 2,2-Di(4-hydroxyphenyl)propan, im allgemeinen - wie auch im folgenden - als Bisphenol A bezeichnet.

Anstelle von Bisphenol A können auch andere aromatische Dihydroxyverbindungen verwendet werden, insbesondere 2,2-Di(4-hydroxyphenyl)pentan, 2,6-Dihydroxynapthalin, 4,4'-Dihydroxydiphenylsulfon, 4,4'-Dihydroxydiphenylether, 4,4'-Dihydroxydiphenylsulfit, 4,4'-Dihydroxydiphenylmethan, 1,1-Di-(4-hydroxyphenyl)ethan oder 4,4-Dihydroxydiphenyl sowie Mischungen der vorgenannten Dihydroxyverbindungen.

Besonders bevorzugte Polycarbonate sind solche auf der Basis von Bisphenol A oder Bisphenol A zusammen mit bis zu 30 mol.-% der vorstehend genannten aromatischen Dihydroxyverbindungen.

Die relative Viskosität dieser Polycarbonate liegt im allgemeinen im Bereich von 1,1 bis 1,5, insbesondere 1,28 bis 1,4 (gemessen bei 25°C in einer 0,5 gew.-%igen Lösung in Dichlormethan).

Geeignete Polyester sind ebenfalls an sich bekannt und in der Literatur beschrieben. Sie enthalten einen aromatischen Ring in der Hauptkette, der von einer aromatischen Dicarbonsäure herrührt. Der aromatische Ring kann auch substituiert sein, z.B. durch Halogen wie Chlor und Brom oder durch $C_1$-$C_4$-Alkylgruppen wie Methyl-, Ethyl-, i- bzw. n-Propyl- und n-, i- bzw. tert.-Butylgruppen.

Die Polyester können durch Umsetzung von aromatischen Dicarbonsäuren, deren Estern oder anderer esterbildender Derivate derselben mit aliphatischen Dihydroxyverbindungen in an sich bekannter Weise hergestellt werden.

Als bevorzugte Dicarbonsäuren sind Naphthalindicarbonsäure, Terephthalsäure und Isophthalsäure oder deren Mischungen zu nennen. Bis zu 10 mol.-% der aromatischen Dicarbonsäuren können durch aliphatische oder cycloaliphatische Dicarbonsäuren wie Adipinsäure, Azelainsäure, Sebacinsäure, Dodecandisäuren und Cyclohexandicarbonsäuren ersetzt werden.

Von den aliphatischen Dihydroxyverbindungen werden Diole mit 2 bis 6 Kohlenstoffatomen, insbesondere 1,2-Ethandiol, 1,4-Butandiol, 1,6-Hexandiol, 1,4-Hexandiol, 1,4-Cyclohexandiol und Neopentylglykol oder deren Mischungen bevorzugt.

Als besonders bevorzugte Polyester sind Polyalkylenterephthalate, die sich von Alkandiolen mit 2 bis 6 C-Atomen ableiten, zu nennen. Von diesen werden insbesondere Polyethylenterephthalat, Polyethylennaphthalat und Polybutylenterephthalat bevorzugt.

Die Viskositätszahl der Polyester liegt im allgemeinen im Bereich von 60 bis 200 ml/g (gemessen in einer 0,5 gew.-%igen Lösung in einem Phenol/o-Dichlorbenzolgemisch (Gew.-Verh. 1:1 bei 25°C)).

2. Vinylaromatische Polymere

Das Molekulargewicht dieser an sich bekannten und im Handel erhältlichen Polymeren liegt im allgemeinen im Bereich von 1.500 bis 2.000.000, vorzugsweise im Bereich von 70.000 bis 1.000.000.

Nur stellvertretend seien hier vinylaromatische Polymere aus Styrol, Chlorstyrol, α-Methylstyrol und p-Methylstyrol genannt; in untergeordneten Anteilen (vorzugsweise nicht mehr als 20, insbesondere nicht mehr als 8 Gew.-%), können auch Comonomere wie (Meth)acrylnitril oder (Meth)acrylsäureester am Aufbau beteiligt sein. Besonders bevorzugte vinylaromatische Polymere sind Polystyrol und schlagzäh modifiziertes Polystyrol. Es versteht sich, daß auch Mischungen dieser Polymeren eingesetzt werden können. Die Herstellung erfolgt vorzugsweise nach dem in der EP-A-302 485 beschriebenen Verfahren.

Bevorzugte ASA-Polymerisate sind aufgebaut aus einer Weich- oder Kautschukphase aus einem Pfropfpolymerisat aus:

$A_1$ 50 bis 90 Gew.-% einer Pfropfgrundlage auf Basis von

- $A_{11}$ 95 bis 99,9 Gew.-% eines $C_2$-$C_{10}$-Alkylacrylats und
- $A_{12}$ 0,1 bis 5 Gew.-% eines difunktionellen Monomeren mit zwei olefinischen, nicht konjugierten Doppelbindungen, und

$A_2$ 10 bis 50 Gew.-% einer Pfropfauflage aus

- $A_{21}$ 20 bis 50 Gew.-% Styrol oder substituierten Styrolen der allgemeinen Formel I oder deren Mischungen, und
- $A_{22}$ 10 bis 80 Gew.-% Acrylnitril, Methacrylnitril, Acrylsäureestern oder Methacrylsäureestern oder deren Mischungen,

in Mischung mit einer Hartmatrix auf Basis eines SAN-Copolymeren $A_3$) aus:

$A_{31}$ 50 bis 90, vorzugsweise 55 bis 90 und insbesondere 65 bis 85 Gew.-% Styrol und/oder substituierten Styrolen der allgemeinen Formel I und

$A_{32}$ 10 bis 50, vorzugsweise 10 bis 45 und insbesondere 15 bis 35 Gew.-% Acrylnitril und/oder Methacrylnitril.

Bei der Komponente $A_1$) handelt es sich um ein Elastomeres, welches eine Glasübergangstemperatur von unter -20, insbesondere unter -30°C aufweist.

Für die Herstellung des Elastomeren werden als Hauptmonomere $A_{11}$) Ester der Acrylsäure mit 2 bis 10 C-Atomen, insbesondere 4 bis 8 C-Atomen eingesetzt. Als besonders bevorzugte Monomere seien hier tert.-, iso- und n-Butylacrylat sowie 2-Ethylhexylacrylat genannt, von denen die beiden letztgenannten besonders bevorzugt werden.

Neben diesen Estern der Acrylsäure werden 0,1 bis 5, insbesondere 1 bis 4 Gew.-%, bezogen auf das Gesamtgewicht $A_{11}$ + $A_{12}$ eines polyfunktionellen Monomeren mit mindestens zwei olefinischen, nicht konjugierten Doppelbindungen eingesetzt. Von diesen werden difunktionelle Verbindungen, d.h. mit zwei nicht konjugierten Doppelbindungen bevorzugt verwendet. Beispielsweise seien hier Divinylbenzol, Diallylfumarat, Diallylphthalat, Triallylcyanurat, Triallylisocyanurat, Tricyclodecenylacrylat und Dihydrodicyclopentadienylacrylat genannt, von denen die beiden letzten besonders bevorzugt werden.

Verfahren zur Herstellung der Pfropfgrundlage A1 sind an sich bekannt und z.B. in der DE-B 1 260 135 beschrieben. Entsprechende Produkte sind auch kommerziell im Handel erhältlich.

Als besonders vorteilhaft hat sich in einigen Fällen die Herstellung durch Emulsionspolymerisation erwiesen.

Die genauen Polymerisationsbedingungen, insbesondere Art, Dosierung und Menge des Emulgators werden vorzugsweise so gewählt, daß der Latex des Acrylsäureesters, der zumindest teilweise vernetzt ist, eine mittlere Teilchengröße (Gewichtsmittel $d_{50}$) im Bereich von etwa 200 bis 700, insbesondere von 250 bis 600 nm aufweist. Vorzugsweise hat der Latex eine enge Teilchengrößenverteilung, d.h. der Quotient

$$Q = \frac{d_{90} - d_{10}}{d_{50}}$$

ist vorzugsweise kleiner als 0,5, insbesondere kleiner als 0,35.

Der Anteil der Pfropfgrundlage $A_1$ am Pfropfpolymerisat $A_1$+$A_2$ beträgt 50 bis 90, vorzugsweise 55 bis 85 und insbesondere 60 bis 80 Gew.-%, bezogen auf das Gesamtgewicht von $A_1$+$A_2$.

Auf die Pfropfgrundlage $A_1$ ist eine Pfropfhülle $A_2$ aufgepfropft, die durch Copolymerisation von

$A_{21}$ 20 bis 90, vorzugsweise 30 bis 90 und insbesondere 30 bis 80 Gew.-% Styrol oder substituierten Styrolen der

allgemeinen Formel

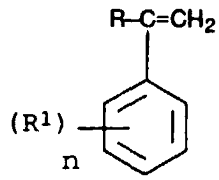

wobei R Alkylreste mit 1 bis 8 C-Atomen, Wasserstoffatome oder Halogenatome und $R^1$ Alkylreste mit 1 bis 8 C-Atomen oder Halogenatome darstellen und n den Wert 0, 1, 2 oder 3 hat, und

$A_{22}$ 10 bis 80, vorzugsweise 10 bis 70 und insbesondere 20 bis 70 Gew.-% Acrylnitril, Methacrylnitril, Acrylsäureestern oder Methacrylsäureestern oder deren Mischungen erhältlich ist.

Beispiele für substituierte Styrole sind α-Methylstyrol, p-Methylstyrol, p-Chlorstyrol und p-Chlor-α-Methylstyrol, wovon Styrol und α-Methylstyrol bevorzugt werden.

Bevorzugte Acryl- bzw. Methacrylsäureester sind solche, deren Homopolymere bzw. Copolymerisate mit den anderen Monomeren der Komponente $A_{22}$) Glasübergangstemperaturen von mehr als 20°C aufweisen; prinzipiell können jedoch auch andere Acrylsäureester eingesetzt werden, vorzugsweise in solchen Mengen, so daß sich insgesamt für die Komponente $A_2$ eine Glasübergangstemperatur $T_g$ oberhalb 20°C ergibt.

Besonders bevorzugt werden Ester der Acryl- oder Methacrylsäure mit $C_1$-$C_8$-Alkoholen und Epoxygruppen enthaltende Ester wie Glycidylacrylat bzw. Glycidylmethacrylat. Als ganz besonders bevorzugte Beispiele seien Methylmethacrylat, t-Butylmethacrylat, Glycidylmethacrylat und n-Butylacrylat genannt, wobei letzterer aufgrund seiner Eigenschaft, Polymerisate mit sehr niedriger $T_g$ zu bilden, vorzugsweise in nicht zu hohem Anteil eingesetzt wird.

Die Pfropfhülle $A_2$) kann in einem oder in mehreren, z.B. zwei oder drei, Verfahrensschritten hergestellt werden, die Bruttozusammensetzung bleibt davon unberührt.

Vorzugsweise wird die Pfropfhülle in Emulsion hergestellt, wie dies z.B. in der DE-PS 12 60 135, DE-OS 32 27 555, DE-OS 31 49 357 und DE-OS 34 14 118 beschrieben ist.

Je nach den gewählten Bedingungen entsteht bei der Pfropfmischpolymerisation ein bestimmter Anteil an freien Copolymerisaten von Styrol bzw. substituierten Styrolderivaten und (Meth)Acrylnitril bzw. (Meth)Acrylsäureestern.

Das Pfropfmischpolymerisat $A_1$ + $A_2$ weist im allgemeinen eine mittlere Teilchengröße von 100 bis 1.000 nm, im besonderen von 200 bis 700 nm, ($d_{50}$-Gewichtsmittelwert) auf. Die Bedingungen bei der Herstellung des Elastomeren $D_1$) und bei der Pfropfung werden daher vorzugsweise so gewählt, daß Teilchengrößen in diesem Bereich resultieren. Maßnahmen hierzu sind bekannt und z.B. in der DE-PS 1 260 135 und der DE-OS 28 26 925 sowie in Journal of Applied Polymer Science, Vol. 9 (1965), S. 2929 bis 2938 beschrieben. Die Teilchenvergrößerung des Latex des Elastomeren kann z.B. mittels Agglomeration bewerkstelligt werden.

Zum Pfropfpolymerisat ($A_1$+$A_2$) zählen im Rahmen dieser Erfindung auch die bei der Pfropfmischpolymerisation zur Herstellung der Komponente $A_2$) entstehenden freien, nicht gepfropften Homo- und Copolymerisate.

Nachstehend seien einige bevorzugte Pfropfpolymerisate angeführt:

1: 60 Gew.-% Pfropfgrundlage $A_1$ aus

$A_{11}$ 98 Gew.-% n-Butylacrylat und
$A_{12}$ 2 Gew.-% Dihydrodicyclopentadienylacrylat und
40 Gew.-% Pfropfhülle $A_2$ aus
$A_{21}$ 75 Gew.-% Styrol und
$A_{22}$ 25 Gew.-% Acrylnitril

2: Pfropfgrundlage wie bei 1 mit 5 Gew.-% einer ersten Pfropfhülle aus Styrol und

35 Gew.-% einer zweiten Pfropfstufe aus
$A_{21}$ 75 Gew.-% Styrol und
$A_{22}$ 25 Gew.-% Acrylnitril

3: Pfropfgrundlage wie bei 1 mit 13 Gew.-% einer ersten Pfropfstufe aus Styrol und 27 Gew.-% einer zweiten

Pfropfstufe aus Styrol und Acrylnitril im Gewichtsverhältnis 3:1

Die als Komponente $A_3$) enthaltenen Produkte können z.B. nach dem in den DE-AS 10 01 001 und DE-AS 10 03 436 beschriebenen Verfahren hergestellt werden. Auch im Handel sind solche Copolymere erhältlich. Vorzugsweise liegt der durch Lichtstreuung bestimmte Gewichtsmittelwert des Molekulargewichts im Bereich von 50.000 bis 500.000, insbesondere von 100.000 bis 250.000.

Das Gewichtsverhältnis von ($A_1$ + $A_2$):$A_3$ liegt im Bereich von 1:2,5 bis 2,5:1, vorzugsweise von 1:2 bis 2:1 und insbesondere von 1:1,5 bis 1,5:1.

Geeignete SAN-Polymere als Komponente A) sind vorstehend (siehe $A_{31}$ und $A_{32}$) beschrieben.

Die Viskositätszahl der SAN-Polymerisate, gemessen gemäß DIN 53 727 als 0,5 gew.-%ige Lösung in Dimethylformamid bei 23°C liegt im allgemeinen im Bereich von 40 bis 100, vorzugsweise 50 bis 80 ml/g.

ABS-Polymere als Polymer (A) in den erfindungsgemäßen mehrphasigen Polymermischungen weisen den gleichen Aufbau wie vorstehend für ASA-Polymere beschrieben auf. Anstelle des Acrylatkautschukes $A_1$) der Pfropfgrundlage beim ASA-Polymer werden üblicherweise konjugierte Diene, eingesetzt, so daß sich für die Pfropfgrundlage $A_4$ vorzugsweise folgende Zusammensetzung ergibt:

$A_{41}$ 70 bis 100 Gew.-% eines konjugierten Diens und
$A_{42}$ 0 bis 30 Gew.-% eines difunktionellen Monomeren mit zwei olefinischen nicht-konjugierten Doppelbindungen

Pfropf auf läge $A_2$ und die Hartmatrix des SAN-Copolymeren $A_3$ bleiben in der Zusammensetzung unverändert. Derartige Produkte sind im Handel erhältlich. Die Herstellverfahren sind dem Fachmann bekannt, so daß sich weitere Angaben hierzu erübrigen.

Das Gewichtsverhältnis von ($A_4$ + $A_2$):$A_3$ liegt im Bereich von 3:1 bis 1:3, vorzugsweise von 2:1 bis 1:2.

Besonders bevorzugte Zusammensetzungen der erfindungsgemäßen Formmassen enthalten als Komponente A) eine Mischung aus:

$A_1$) 10 bis 90 Gew.-% eines Polybutylenterephthalates
$A_2$) 0 bis 40 Gew.-% eines Polyethylenterephthalates
$A_3$) 1 bis 40 Gew.-% eines ASA- oder ABS-Polymeren oder deren Mischungen

Derartige Produkte sind unter dem Warenzeichen Ultradur® S (ehemals Ultrablend® S) von der BASF Aktiengesellschaft erhältlich.

Weitere bevorzugte Zusammensetzungen der Komponente A) enthalten

$A_1$) 10 bis 90 Gew.-% eines Polycarbonates
$A_2$) 0 bis 40 Gew.-% eines Polyesters, vorzugsweise Polybutylenterephthalat,
$A_3$) 1 bis 40 Gew.-% eines ASA- oder ABS-Polymeren oder deren Mischungen.

Derartige Produkte sind unter dem Warenzeichen Terblend® der BASF AG erhältlich.

3. Polyamide

Die Polyamide der erfindungsgemäßen Formmassen weisen im allgemeinen eine Viskositätszahl von 90 bis 350, vorzugsweise 110 bis 240 ml/g auf bestimmt in einer 0,5 gew.-%-igen Lösung in 96 gew.%iger Schwefelsäure bei 25°C auf gemäß ISO 307.

Halbkristalline oder amorphe Harze mit einem Molekulargewicht (Gewichtsmittelwert) von mindestens 5.000, wie sie z.B. in den amerikanischen Patentschriften 2 071 250, 2 071 251, 2 130 523, 2 130 948, 2 241 322, 2 312 966, 2 512 606 und 3 393 210 beschrieben werden, sind bevorzugt.

Beispiele hierfür sind Polyamide, die sich von Lactamen mit 7 bis 13 Ringgliedern ableiten, wie Polycaprolactam, Polycapryllactam und Polylaurinlactam sowie Polyamide, die durch Umsetzung von Dicarbonsäuren mit Diaminen erhalten werden.

Als Dicarbonsäuren sind Alkandicarbonsäuren mit 6 bis 12, insbesondere 6 bis 10 Kohlenstoffatomen und aromatische Dicarbonsäuren einsetzbar. Hier seien nur Adipinsäure, Azelainsäure, Sebacinsäure, Dodecandisäure und Terephthal- und/oder Isophthalsäure als Säuren genannt.

Als Diamine eignen sich besonders Alkandiamine mit 6 bis 12, insbesondere 6 bis 8 Kohlenstoffatomen sowie m-Xylylendiamin, Di-(4-aminophenyl)methan, Di-(4-aminocyclohexyl)-methan, 2,2-Di-(4-aminophenyl)-propan oder 2,2-Di-(4-aminocyclohexyl)-propan.

Bevorzugte Polyamide sind Polyhexamethylenadipinsäureamid, Polyhexamethylensebacinsäureamid und

Polycaprolactam sowie Copolyamide 6/66, insbesondere mit einem Anteil von 5 bis 95 Gew.-% an Caprolactam-Einheiten.

Außerdem seien auch noch Polyamide erwähnt, die z.B. durch Kondensation von 1,4-Diaminobutan mit Adipinsäure unter erhöhter Temperatur erhältlich sind (Polyamid-4,6). Herstellungsverfahren für Polyamide dieser Struktur sind z.B. in den EP-A 38 094, EP-A 38 582 und EP-A 39 524 beschrieben.

Weiterhin sind Polyamide, die durch Copolymerisation zweier oder mehrerer der vorgenannten Monomeren erhältlich sind, oder Mischungen mehrerer Polyamide geeignet, wobei das Mischungsverhältnis beliebig ist.

Weiterhin haben sich solche teilaromatischen Copolyamide wie PA 6/6T und PA 66/6T als besonders vorteilhaft erwiesen, deren Triamingehalt weniger als 0,5, vorzugsweise weniger als 0,3 Gew.-% beträgt (siehe EP-A 299 444).

Die Herstellung der bevorzugten teilaromatischen Copolyamide mit niedrigem Triamingehalt kann nach den in den EP-A 129 195 und 129 196 beschriebenen Verfahren erfolgen.

4. Polyphenylenether

Geeignete Polyphenylenether weisen im allgemeinen ein Molekulargewicht (Gewichtsmittelwert) im Bereich von 10 000 bis 80 000, vorzugsweise von 20 000 bis 60 000 und insbesondere von 40 000 bis 55 000 auf.

Die Molekulargewichtsverteilung wird im allgemeinen mittels Gelpermeationschromatographie (GPC) bestimmt. Hierzu werden PPE-Proben in THF unter Druck bei 110°C gelöst. Bei Raumtemperatur wird mit THF als Elutionsmittel 0,16 ml einer 0,25 %igen Lösung auf geeignete Trennsäulen injiziert. Die Detektion erfolgt allgemein mit einem UV-Detektor. Die Trennsäulen werden zweckmäßig mit PPE-Proben bekannter Molekulargewichtsverteilung geeicht.

Dies entspricht einer reduzierten spezifischen Viskosität $\eta_{red}$ von 0,2 bis 0,9 dl/g, vorzugsweise von 0,35 bis 0,8 und insbesondere 0,45 bis 0,6, gemessen in einer 0,5 gew.%igen Lösung in Chloroform bei 25°C.

Die unmodifizierten Polyphenylenether $a_1$) sind an sich bekannt und werden vorzugsweise durch oxidative Kupplung von in o-Position disubstituierten Phenolen hergestellt.

Als Beispiele für Substituenten sind Halogenatome wie Chlor oder Brom und Alkylreste mit 1 bis 4 Kohlenstoffatomen, die vorzugsweise kein $\alpha$-ständiges tertiäres Wasserstoffatom aufweisen, z.B. Methyl-, Ethyl-, Propyl- oder Butylreste zu nennen. Die Alkylreste können wiederum durch Halogenatome wie Chlor oder Brom oder durch eine Hydroxylgruppe substituiert sein. Weitere Beispiele möglicher Substituenten sind Alkoxireste, vorzugsweise mit bis zu 4 Kohlenstoffatomen oder gegebenenfalls durch Halogenatome und/ oder Alkylgruppen substituierte Phenylreste. Ebenfalls geeignet sind Copolymere verschiedener Phenole wie z.B. Copolymere von i 2,6-Dimethylphenol und 2,3,6-Trimethylphenol. Selbstverständlich können auch Gemische verschiedener Polyphenylenether eingesetzt werden.

Die als Komponente $a_1$) verwendeten Polyphenylenether können gegebenenfalls verfahrensbedingte Fehlstellen enthalten, die beispielsweise bei White et al., Macromolecules 23, 1318-1329 (1990) beschrieben sind.

Vorzugsweise werden solche Polyphenylenether eingesetzt, die mit vinylaromatischen Polymeren verträglich, d.h. ganz oder weitestgehend in diesen Polymeren löslich sind (vgl. A. Noshay, Block Copolymers, S. 8 bis 10, Academic Press, 1977 und O. Olabisi, Polymer-Polymer Miscibility, 1979, S. 117 bis 189).

Beispiele für Polyphenylenether sind Poly(2,6-dilauryl-1,4-phenylen)ether, Poly(2,6-diphenyl-1,4-phenylen) ether, Poly(2,6-dimethoxi-1,4-phenylen)ether, Poly(2,6-Diethoxi-1,4-phenylen)ether, Poly(2-methoxi-6-ethoxi-1,4-phenylen)ether, Poly(2-ethyl-6-stearyloxi-1,4-phenylen)ether, Poly(2,6-dichlor-1,4-phenylen)ether, Poly(2-methyl-6-phenyl-1,4-phenylen)ether, Poly(2,6-dibenzyl-1,4-phenylen)ether, Poly(2-ethoxi-1,4-phenylen)ether, Poly(2-chlor-1,4-phenylen)ether, Poly(2,5-dibrom-1,4-phenylen)ether. Bevorzugt werden Polyphenylenether eingesetzt, bei denen die Substituenten Alkylreste mit 1 bis 4 Kohlenstoffatomen sind, wie Poly(2,6-dimethyl-1,4-phenylen(ether, Poly(2,6-diethyl-1,4-phenylen)ether, Poly(2-methyl-6-ethyl-1,4-phenylen)ether, Poly(2-methyl-6-propyl-1,4-phenylen)ether, Poly (2,6-dipropyl-1,4-phenylen)ether und Poly(2-ethyl-6-propyl-1,4-phenylen)ether.

Weiterhin sind Pfropfcopolymere aus Polyphenylenether und vinylaromatischen Polymeren wie Styrol, $\alpha$-Methylstyrol, Vinyltoluol und Chlorstyrol geeignet.

Funktionalisierte oder modifizierte Polyphenylenether sind an sich bekannt, z.B. aus WO-A 86/02086, WO-A 87/00540, EP-A-222 246, EP-A-223 116 und EP-A-254 048 und werden bevorzugt für Mischungen mit PA oder Polyester eingesetzt.

Üblicherweise wird ein unmodifizierter Polyphenylenether $a_1$) durch Einbau mindestens einer Carbonyl-, Carbonsäure-, Säureanhydrid-, Säureamid-, Säureimid-, Carbonsäureester-, Carboxylat-, Amino-, Hydroxyl-, Epoxi-, Oxazolin-, Urethan-, Harnstoff-, Lactam- oder Halogenbenzylgruppe modifiziert, so daß eine hinreichende Verträglichkeit z.B. mit dem Polyamid gewährleistet ist.

Die Modifizierung wird im allgemeinen durch Umsetzung eines unmodifizierten Polyphenylenethers $a_1$) mit einem Modifiziermittel, das mindestens eine der oben genannten Gruppen und mindestens eine C-C-Doppel- oder C-C-Dreifachbindung enthält, in Lösung (WO-A 86/2086), in wäßriger Dispersion, in einem Gasphasenverfahren (EP-A-25 200) oder in der Schmelze gegebenenfalls in Gegenwart von geeigneten vinylaromatischen Polymeren oder Schlagzähmodifiern durchgeführt, wobei wahlweise Radikalstarter zugegen sein können.

Geeignete Modifiziermittel ($a_3$) sind beispielsweise Maleinsäure, Methylmaleinsäure, Itaconsäure, Tetrahydrophthalsäure, deren Anhydride und Imide, Fumarsäure, die Mono- und Diester dieser Säuren, z.B. von $C_1$- und $C_2$- bis $C_8$-Alkanolen ($a_{31}$), die Mono- oder Diamide dieser Säuren wie N-Phenylmaleinimid (Monomere $a_{32}$), Maleinhydrazid. Weiterhin seien beispielsweise N-Vinylpyrrolidon und (Meth)acryloylcaprolactam ($a_{33}$) genannt.

Bevorzugt wird in den erfindungsgemäßen Formmassen als Komponente A) ein modifizierter Polyphenylenether eingesetzt, der durch Umsetzen von

$a_1$) 70 bis 99,95, bevorzugt 76,5 bis 99,94 Gew.-% eines unmodifizierten Polyphenylenethers,

$a_2$) 0 bis 25, bevorzugt 0 bis 20 Gew.-% eines vinylaromatischen Polymeren,

$a_3$) 0,05 bis 5, bevorzugt 0,05 bis 2,5 Gew.-% mindestens einer Verbindung aus der Gruppe gebildet aus

$a_{31}$) einer $\alpha,\beta$-ungesättigten Dicarbonylverbindung,

$a_{32}$) eines Amid-Gruppen enthaltenden Monomeren mit einer polymerisierbaren Doppelbindung und

$a_{33}$) eines Lactam-Gruppen enthaltenden Monomeren mit einer polymerisierbaren Doppelbindung,

$a_4$) 0 bis 5, bevorzugt 0,01 bis 0,09 Gew.-% eines Radikalstarters,

wobei sich die Gewichtsprozente auf die Summe von $a_1$) bis $a_4$) beziehen, im Verlaufe von 0,5 bis 15 Minuten bei 240 bis 375°C in geeigneten Misch- und Knetaggregaten wie Zweischneckenextrudern erhältlich ist.

Das vinylaromatische Polymer $a_2$) soll vorzugsweise mit dem eingesetzten Polyphenylenether verträglich sein, wie vorstehend unter 2. beschrieben.

Beispiele für bevorzugte, mit Polyphenylenethern verträgliche vinylaromatische Polymere sind der bereits erwähnten Monografie von Olabisi, S. 224 bis 230 und 245 zu entnehmen.

Als Radikalstarter $a_4$) seien genannt:

Di-(2,4-dichlorbenzoyl)peroxid, tert.-Butylperoxid, Di-(3,5,5-trimethylhexanol)peroxid, Dilauroylperoxid, Didecanoylperoxid, Dipropionylperoxid, Dibenzoylperoxid, tert.-Butylperoxy-2-ethylhexoat, tert.-Butylperoxydiethylacetat, tert.-Butylperoxyisobutyrat, 1,1-Di-tert.-butylperoxy-3,3,5-trimethylcyclohexan, tert.-Butylperoxyisopropylcarbonat, tert.-Butylperoxy-3,3,5-trimethylhexoat, tert.-Butylperacetat, tert.-Butylperbenzoat, 4,4-Di-tert.-butylperoxyvaleriansäure-butylester, 2,2-Di-tert.-butylperoxybutan, Dicumylperoxid, tert.-Butylcumylperoxid, 1,3-Di-(tert.-butylperoxyisopropyl)benzol und Di-tert.-butylperoxid. Genannt seien ebenfalls organische Hydroperoxide wie Di-isopropylbenzolmonohydroperoxid, Cumolhydroperoxid, tert.-Butylhydroperoxid, p-Methylhydroperoxid und Pinanhyroperoxid sowie hochverzweigte Alkane der allgemeinen Struktur

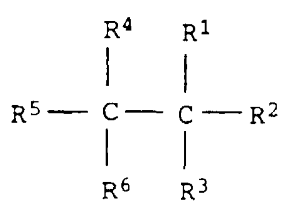

wobei $R^1$ bis $R^6$ Alkylgruppen mit 1 bis 8 C-Atomen, Alkoxygruppen mit 1 bis 8 C-Atomen, Arylgruppen wie Phenyl, Naphthyl oder 5- oder 6-gliedrige Heterocyclen mit einem $\pi$-Elektronensystem und Stickstoff, Sauerstoff oder Schwefel als Heteroatomen darstellen. Die Substituenten $R^1$ bis $R^6$ können ihrerseits funktionelle Gruppen als Substituenten enthalten, wie Carboxyl-, Carboxylderivat-, Hydroxyl-, Amino-, Thiol- oder Epoxidgruppen. Beispiele sind 2,3-Dimethyl-2,3-diphenylbutan, 3,4-Dimethyl-3,4 -diphenylhexan und 2,2,3,3-Tetraphenylbutan.

Besonders bevorzugte Polyphenylenether A) in den erfindungsgemäßen Formmassen werden durch Modifizierung mit Maleinsäure, Maleinsäureanhydrid und Fumarsäure erhalten. Derartige Polyphenylenether weisen vorzugsweise eine Säurezahl von 1,8 bis 3,2, insbesondere von 2,0 bis 3,0 auf.

Die Säurezahl ist ein Maß für den Modifizierungsgrad des Polyphenylenethers und wird im allgemeinen durch

Titration mit Basen unter Inertgasbedingungen bestimmt.

Die Säurezahl entspricht allgemein der Menge an Base in mg, welche zur Neutralisation von 1 g eines derart säuremodifizierten Polyphenylenethers B) benötigt wird (nach DIN 53 402).

Als Komponente B) enthalten die erfindungsgemäßen Formmassen 1 bis 30, vorzugsweise 1 bis 20 und insbesondere 5 bis 20 Gew.-% einer Alkylphosphonsäureverbindung der Formel I

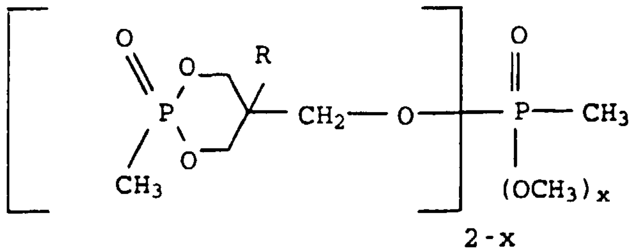

I

wobei R einen geradkettigen oder verzweigten Alkylrest mit 1 bis 4 C-Atomen, wobei der Ethylrest bevorzugt ist, und x 0 oder 1 bedeutet.

Bevorzugt sind Mischungen von Verbindungen I mit einem Ethylrest, wobei x 0 oder 1 sein kann. Derartige Mischungen sind im Handel unter den Warenzeichen Antiblaze® 1045 (Fa. Albright und Wilson) oder Hostaflam® OP 920 (Fa. Hoechst AG) erhältlich.

Als Komponente C) enthalten die erfindungsgemäßen Formmassen 1 bis 30, vorzugsweise 1 bis 20 und insbesondere 5 bis 20 und ganz besonders 10 bis 15 Gew.-% eines Synergisten für die Komponente B) ausgewählt aus der Gruppe der anorganischen Calcium- oder Magnesiumverbindungen oder deren Mischungen.

Es können alle möglichen Verbindungen wie Hydroxide, Carbonate, Hydroxycarbonate, Sulfate, Silikate sowie Phosphate und Phosphonate, wobei Magnesiumhydroxid bevorzugt ist.

Insbesondere sind Magnesiumsilikate in unterschiedlichen Mischungsverhältnissen geeignet, wobei Talkum bevorzugt ist.

Typische Zusammensetzungen von Talkum sind üblicherweise durch Elementaranalyse bestimmbar und enthalten als wesentliche Bestandteile $SiO_2$, MgO, $Al_2O_3$, $Fe_2O_3$, CaO (nach Verbrennen).

Als besonders geeignet haben sich Mischungen aus

$c_1$) einem Magnesium-Calcium-Carbonat der allgemeinen Formel $Mg_xCa_y(CO_3)_{x+y} \cdot m\ H_2O$,
wobei x und y Zahlen von 1 bis 5 bedeuten
und $x/y \geq 1$ gilt
und $m \geq 0$ und

$c_2$) einem basischen Magnesium-Carbonat der allgemeinen Formel $Mg_n(CO_3)_v(OH)_{2n-2v} \cdot w\ H_2O$, wobei
n eine Zahl von 1 bis 6 bedeutet,
v eine Zahl größer als 0 und kleiner als 6
und $n/v > 1$ gilt
und $w \geq 0$

erwiesen, wobei das Mengenverhältnis von $c_1$) :$c_2$) im Bereich von 1:1 bis 3:1 liegt.

Die Magnesium-Calcium-Carbonate $b_1$) können sowohl wasserhaltig als auch wasserfrei sein. Bevorzugt sind die natürlich vorkommenden Mineralien wie Dolomit und Huntit.

Besonders bevorzugt ist eine wasserfreie Form, in der x = 3 und y = 1 gilt, $Mg_3Ca(CO_3)_4$ (Huntit).

Die basischen Magnesiumcarbonate $b_2$) können ebenfalls sowohl in wasserhaltiger als auch wasserfreier Form eingesetzt werden. Auch hier sind die natürlich vorkommenden Mineralien wie Hydromagnesit, eine wasserhaltige Verbindung mit n = 5, v = 4 und w = 4, $Mg_5(CO_3)_4(OH)_2 \cdot 4\ H_2O$ bevorzugt.

Besonders bevorzugt liegt das Verhältnis von $c_1$):$c_2$) im Bereich von 1:1 bis 2:1.

Als Komponente D) enthalten die erfindungsgemäßen Formmassen 1 bis 50, bevorzugt 5 bis 40 und insbesondere 10 bis 30 Gew.-% eines faserförmigen Füllstoffes.

Als bevorzugte faserförmige Füllstoffe seien Kohlenstoffasern, Aramid-Fasern und Kaliumtitanat-Fasern genannt, wobei Glasfasern als E-Glas besonders bevorzugt sind. Diese können als Rovings oder Schnittglas in den handelsüblichen Formen eingesetzt werden.

Die faserförmigen Füllstoffe können zur besseren Verträglichkeit mit dem Thermoplasten mit einer Silanverbindung oberflächlich vorbehandelt sein.

Geeignete Silanverbindungen sind solche der allgemeinen Formel III

$$(X\text{-}(CH_2)_n)_K\text{-}Si\text{-}(O\text{-}C_mH_{2m+1})_{4-K} \qquad III$$

in der die Substituenten folgende Bedeutung haben:

x $NH_2$- ;

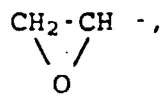

HO- ;
n eine ganze Zahl von 2 bis 10, bevorzugt 3 bis 4
m eine ganze Zahl von 1 bis 5, bevorzugt 1 bis 2
k eine ganze Zahl von 1 bis 3, bevorzugt 1

Bevorzugte Silanverbindungen sind Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Die Silanverbindungen werden im allgemeinen in Mengen von 0,05 bis 5, vorzugsweise 0,5 bis 1,5 und insbesondere 0,8 bis 1 Gew.-% (bezogen auf C) zur Oberflächenbeschichtung eingesetzt.

Geeignet sind auch nadelförmige mineralische Füllstoffe.

Unter nadelförmigen mineralischen Füllstoffen wird im Sinne der Erfindung ein mineralischer Füllstoff mit stark ausgeprägtem nadelförmigen Charakter verstanden. Als Beispiel sei nadelförmiger Wollastonit genannt. Vorzugsweise weist das Mineral ein L/D-(Länge Durchmesser) -Verhältnis von 8 : 1 bis 35 : 1, bevorzugt von 8 : 1 bis 11 : 1 auf. Der mineralische Füllstoff kann gegebenenfalls mit den vorstehend genannten Silanverbindungen vorbehandelt sein; die Vorbehandlung ist jedoch nicht unbedingt erforderlich.

Als Komponente E) können die erfindungsgemäßen Formmassen bis zu 40, vorzugsweise bis zu 30 Gew.-% weiterer Zusatzstoffe und Verarbeitungshilfsmittel enthalten. Als Beispiel seien in Mengen von 0 bis 2 Gew.-% fluorhaltige Ethylenpolymerisate genannt. Hierbei handelt es sich um Polymerisate des Ethylens mit einem Fluorgehalt von 55 bis 76 Gew.-%, vorzugsweise 70 bis 76 Gew.-%.

Beispiele hierfür sind Polytetrafluorethylen (PTFE), Tetrafluorethylen-Copolymere oder Tetrafluorethylen-Copolymerisate mit kleineren Anteilen (in der Regel bis zu 50 Gew.-%) copolymerisierbarer ethylenisch ungesättigter Monomerer. Diese werden z.B. von Schildknecht in "Vinyl and Related Polymers", Wiley-Verlag, 1952, Seiten 484 bis 494, und von Wall in "Fluorpolymers" (Wiley Interscience, 1972) beschrieben.

Diese fluorhaltigen Ethylenpolymerisate liegen homogen verteilt in den Formmassen vor und weisen bevorzugt eine Teilchengröße $d_{50}$ (Zahlenmittelwert) im Bereich von 0,05 bis 10 µm, insbesondere von 0,1 bis 5 µm auf. Diese geringen Teilchengrößen lassen sich besonders bevorzugt durch Verwendung von wäßrigen Dispersionen von fluorhaltigen Ethylenpolymerisaten und deren Einarbeitung z.B. in eine Polyesterschmelze erzielen.

Als Zusatzstoffe seien Schlagzähmodifier genannt (auch als kautschukelastische Polymerisate oder Elastomere bezeichnet), die in Mengen bis zu 20 Gew.-%, bevorzugt bis zu 15 Gew.-% enthalten sein können.

Geeignet sind übliche Kautschuke, z. B. Ethylencopolymere mit reaktiven Gruppen, Acrylatkautschuk und Polymerisate konjugierter Diene, wie Polybutadienkautschuk und Polyisoprenkautschuk. Die Dienpolymerisate können, in an sich bekannter Weise, teilweise oder vollständig hydriert sein. Außerdem kommen z. B. in Betracht: hydrierter Styrolbutadienkautschuk, Ethylen-Propylen-Dien-Kautschuk, Polybutylen- und Polyoctenamerkautschuke, Ionomere, Blockcopolymere aus vinylaromatischen Monomeren mit Dienen wie Butadien oder Isopren (an sich bekannt aus EP-A 62 282) mit dem Aufbau $M^1M^{2-}$, $M^1M^2M^1M^{2}$- oder $M^1M^2M^1$-, wobei diese Blockpolymerisate auch Segmente mit statistischer Verteilung enthalten können, sowie Stern-Block-Copolymere. Als besonders geeignet haben sich Polymerisate konjugierter Diene wie Polybutadienkautschuk oder Polyisoprenkautschuk erwiesen. Derartige synthetische Kautschuke sind dem Fachmann geläufig und zusammenfassen in "Ullmanns Encyklopädie der Technischen Chemie", 4. Auflage, Bd. 13, Seiten 595 bis 634, Verlag Chemie GmbH, Weinheim 1977, beschrieben.

Als Zusatzstoffe seien genannt Hitze- und Lichtstabilisatoren, Gleit- und Entformungsmittel, Färbemittel, wie

Farbstoffe und Pigmente in üblichen Mengen.

Auch niedermolekulare Polymere kommen als Zusatzstoffe in Betracht, wobei Polyethylenwachs als Gleitmittel besonders bevorzugt ist.

Über Art und Menge dieser Zusatzstoffe lassen sich die gewünschten Eigenschaften der Endprodukte in weitem Maße steuern.

Die Herstellung der erfindungsgemäßen Formmassen kann nach an. sich bekannten Verfahren erfolgen. Nach einer bevorzugten Ausführungsform erfolgt die Herstellung durch Zugabe der Komponenten B) sowie D), zur Schmelze der Komponente A).

Zweckmäßigerweise verwendet man hierzu Extruder, z.B. Einschnekken- oder Zweischneckenextruder oder andere herkömmliche Plastifizierungsvorrichtungen wie Brabender-Mühlen oder Banbury-Mühlen.

Die Kunststoffmischungen kann man bei Anwesenheit eines thermoplastischen Polykondensates danach einer weiteren thermischen Behandlung, d.h. einer Nachkondensation in fester Phase unterwerfen. In Temperaggregaten wie z.B. einem Taumler-Mischer oder kontinuierlich sowie diskontinuierlich betriebenen Temperrohren tempert man die in der jeweiligen Bearbeitungsform vorliegende Formmasse, bis die gewünschte Viskositätszahl VZ oder relative Viskosität $\eta$rel z.B. des Polyamids erreicht wird. Der Temperaturbereich der Temperung hängt vom Schmelzpunkt der reinen Komponente A) ab. Bevorzugte Temperaturbereiche sind 5 bis 50, vorzugsweise 20 bis 30°C unterhalb des jeweiligen Schmelzpunkts von A). Das Verfahren erfolgt vorzugsweise in einer Inertgasatmosphäre, wobei Stickstoff und überhitzter Wasserdampf als Inertgase bevorzugt sind.

Die Verweilzeiten betragen im allgemeinen von 0,5 bis 50, vorzugsweise 4 bis 20 Stunden. Anschließend werden aus den Formmassen mittels üblicher Vorrichtungen Formteile hergestellt.

Die erfindungsgemäßen Formmassen zeichnen sich durch eine gute Verarbeitbarkeit (Formbelag ist stark reduziert) sowie durch eine gute Flammfestigkeit insbesondere kein brennendes Abtropfen aus. Darüber hinaus bleiben die mechanischen Eigenschaften durch die Anwesenheit der Phosphorverbindung weitestgehend erhalten. Deshalb eignen sie sich zur Herstellung von Fasern, Folien und Formkörpern jeglicher Art, welche insbesondere im Elektrobereich sowie Elektronikindustrie verwendet werden, z.B. Lampenteile wie Lampenfassungen und -halterungen, Stecker und Steckerleisten, Spülenkörper, Gehäuse für Kondensatoren oder Schaltschütze sowie Sicherungsschalter, Relaisgehäuse und Reflektoren sowie Abdeckungen, Computergehäuse und Schalterteile.

Beispiele

Komponente A:

A1: Poly-ε-Caprolactam mit einer Viskositätszahl VZ von 151 ml/g gemessen als 0,5 %ige Lösung in 96 gew.-%iger $H_2SO_4$ bei 25°C gemäß ISO 307; Ultramid® B3 der BASF AG.

A2: PA 66 mit einer VZ von 148 ml/g, Ultramid® A3 der BASF AG.

A3: PA 6/66 (82:18) mit einer VZ von 140 ml/g, Ultramid® C3 der BASF AG.

A4: Polybutylenterephthalat mit einer VZ von 130 ml/g gemessen in Phenol/Dichlorbenzol (1:1) bei 25°C, Ultradur® B4500 der BASF AG.

Komponente B

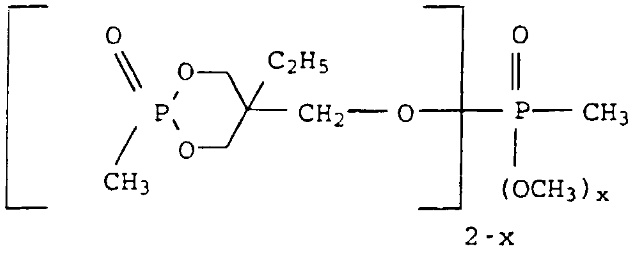

mit x = 0 und 1 (Antiblaze® 1045 der Firma Albright und Wilson).

Komponente C

C1: Talkum (IT Extra Norwegian Talc) Zusammensetzung gemäß Elementaranalyse
60,2 % $SiO_2$
37,7 % MgO
1 % $Al_2O_3$
0,9 % $Fe_2O_3$
0,5 % CaO
5,7 % Glühverlust

C2: Magnesiumhydroxid (Magnifin® Se 465, Martinswerke)

C3: Eine Mischung aus
$Mg_3Ca(CO_3)_4$ (Huntit) und
$Mg_5(CO_3)_4\,(OH)_2 \cdot 4H_2O$ (Hydromagnesit)
im Verhältnis 2:1 (Securoc®, Incemin AG)

Komponente D

Silanisierte Schnittglasfaser mit einem mittleren Durchmesser von 10 µm.

Herstellung der thermoplastischen Formmassen

Die Komponenten A) bis D) wurden in den der Tabelle zu entnehmenden Mengenverhältnissen auf einer ZSK 25 mit 5 kg/h und einer Umdrehungszahl von 120 $min^{-1}$ bei 260°C abgemischt, der Strang extrudiert, im Wasserbad gekühlt und anschließend granuliert sowie bei 80°C im Vakuum 10 h getrocknet. Die Schnittglasfasern wurden in den Schmelzestrom dosiert.
Aus dem Granulat wurden auf einer Spritzgußmaschine bei 260°C 1/16" Prüfstäbe hergestellt und nach üblicher Konditionierung gemäß UL 94 (Flammschutzprüfung) geprüft.
Die Zusammensetzungen der Formmassen und die Ergebnisse der Messungen sind der Tabelle zu entnehmen.

Tabelle

| Beispiel | Zusammensetzung [Gew.-%] | | | | UL 94 1/16" | Brennendes Abtropfen |
|---|---|---|---|---|---|---|
| 1V | 60 A1 | 15 B | - | 25 D | V2 | ja |
| 2V | 55 A1 | 20 B | - | 25 D | V2 | ja |
| 3V | 55 A1 | - | 20 C1 | 25 D | V2 | ja |
| 4 | 45 A1 | 15 B | 15 C1 | 25 D | V-0 | nein |
| 5 | 45 A1 | 15 B | 15 C2 | 25 D | V-0 | nein |
| 6 | 45 A1 | 15 B | 15 C3 | 25 D | V-0 | nein |
| 7V | 60 A2 | 15 B | - | 25 D | V2 | ja |
| 8V | 55 A2 | 20 B | - | 25 D | V2 | ja |
| 9 | 45 A2 | 15 B | 15 C1 | 25 D | V-0 | nein |
| 10 | 45 A2 | 15 B | 15 C2 | 25 D | V-0 | nein |
| 11 | 45 A2 | 15 B | 15 C3 | 25 D | V-0 | nein |
| 12V | 60 A3 | 15 B | - | 25 D | V2 | ja |
| 13V | 55 A3 | 20 B | - | 25 D | V2 | ja |
| 14 | 45 A3 | 15 B | 15 C1 | 25 D | V-0 | nein |
| 15 | 45 A3 | 15 B | 15 C2 | 25 D | V-0 | nein |
| 16 | 45 A3 | 15 B | 15 C3 | 25 D | V-0 | nein |
| 17V | 65 A4 | 10 B | - | 25 D | V2 | ja |
| 18V | 65 A4 | - | 10 C1 | 25 D | V2 | ja |
| 19 | 55 A4 | 10 B | 10 C1 | 25 D | V-0 | nein |
| 20 | 55 A4 | 10 B | 10 C2 | 25 D | V-0 | nein |
| 21 | 55 A4 | 10 B | 10 C3 | 25 D | V-0 | nein |

**Patentansprüche**

1. Thermoplastische Formmassen, enthaltend

A) 5 bis 97 Gew.-% eines thermoplastischen Polymeren ausgewählt aus der Gruppe der Polyamide, Polyester, Polyphenylenether, vinylaromatischen Polymeren oder deren Mischungen,

B) 1 bis 30 Gew.-% einer Alkylphosphonsäureverbindung der Formel I

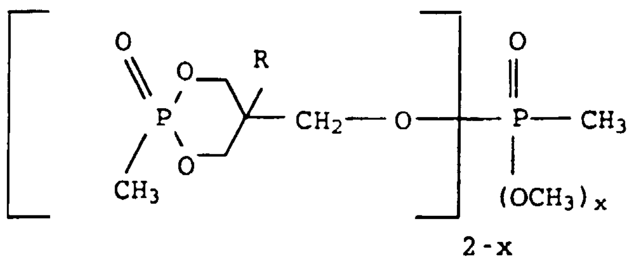

I

wobei R einen Alkylrest mit 1 bis 4 C-Atomen und x 0 oder 1 bedeutet,

C) 1 bis 30 Gew.-% eines Synergisten für B) ausgewählt aus der Gruppe der anorganischen Calcium- oder Magnesiumverbindungen oder deren Mischungen,

D) 1 bis 50 Gew.-% eines faserförmigen Füllstoffes und

E) 0 bis 40 Gew.-% weiterer Zusatzstoffe und Verarbeitungshilfsmittel,

wobei die Gewichtsprozente der Komponenten A) bis E) jeweils 100 % ergeben.

2. Thermoplastische Formmassen nach Anspruch 1, wobei R für einen Ethylrest in Formel I der Komponente B) steht.

3. Thermoplastische Formmassen nach Anspruch 1 oder 2, wobei die Komponente C) aus Talkum, Magnesiumhydroxid, Magnesium- oder Calciumcarbonaten oder deren Mischungen aufgebaut ist.

4. Thermoplastische Formmassen nach den Ansprüchen 1 bis 3, denen als Komponente C) eine Mischung aus

$c_1$) einem Magnesium-Calcium-Carbonat der allgemeinen Formel

$$Mg_xCa_y(CO_3)_{x+y} \cdot m\,H_2O,$$

wobei x und y Zahlen von 1 bis 5 bedeuten
und $x/y \geq 1$ gilt
und $m \geq 0$ und

$c_2$) einem basischen Magnesium-Carbonat der allgemeinen Formel

$$Mg_n(CO_3)_v(OH)_{2n-2v} \cdot w\,H_2O,$$

wobei n eine Zahl von 1 bis 6 bedeutet,
v eine Zahl größer als 0 und kleiner als 6
und $n/v > 1$ gilt
und $w \geq 0$

eingesetzt wird, wobei das Mengenverhältnis von $c_1$):$c_2$) im Bereich von 1:1 bis 3:1 liegt.

5. Thermoplastische Formmassen nach den Ansprüchen 1 bis 4, in denen die Komponente A) aus PA 66, PA 6, PA 6/6T, PA 66/6T oder PA 6/66 oder deren Mischungen aufgebaut ist.

6. Thermoplastische Formmassen nach den Ansprüchen 1 bis 5, in denen die Komponente D) aus Glasfasern besteht.

7. Verwendung der thermoplastischen Formmassen gemäß den Ansprüchen 1 bis 6 zur Herstellung von Fasern, Folien und Formkörpern.

8. Formkörper, erhältlich aus den thermoplastischen Formmassen gemäß den Ansprüchen 1 bis 6.

## Claims

1. A thermoplastic molding composition comprising

| | |
|---|---|
| A) from 5 to 97 % | by weight of a thermoplastic polymer selected from the group consisting of polyamides, polyesters, polyphenylene ethers, vinylaromatic polymers and mixtures of these, |
| B) from 1 to 30 % | by weight of an alkylphosphonic acid compound of the formula I |

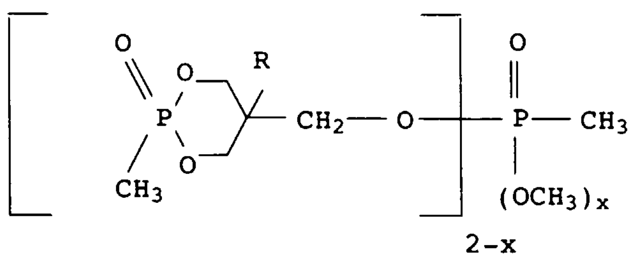

I

where R is alkyl having from 1 to 4 carbon atoms and x is 0 or 1,

| | |
|---|---|
| C) from 1 to 30 % | by weight of a synergist for B) selected from the group consisting of inorganic calcium and magnesium compounds and mixtures of these, |
| D) from 1 to 50 % | by weight of a fibrous filler and |
| E) from 0 to 40 % | by weight of other additives and processing aids, |

where the sum of the percentages by weight of components A) to E) is always 100 %.

2. A thermoplastic molding composition as claimed in claim 1, where R in formula I of component B) is ethyl.

3. A thermoplastic molding composition as claimed in claim 1 or 2, where component C) comprises talc, magnesium hydroxide, magnesium carbonates or calcium carbonates or mixtures of these.

4. A thermoplastic molding composition as claimed in any of claims 1 to 3, in which component C) is a mixture of

$c_1$) a magnesium calcium carbonate of the formula

$$Mg_xCa_y(CO_3)_{x+y} \cdot m\ H_2O,$$

where x and y are numbers from 1 to 5
and $x/y \geq 1$
and $m \geq 0$ and

$c_2$) a basic magnesium carbonate of the formula

$$Mg_n(CO_3)_v(OH)_{2n-2v} \cdot w\ H_2O,$$

where n is a number from 1 to 6,
v is a number greater than 0 and smaller than 6
and n/v > 1
and w ≥ 0

where the $c_1$):$c_2$) mixing ratio is in the range from 1:1 to 3:1.

**5.** A thermoplastic molding composition as claimed in any of claims 1 to 4, in which component A) comprises nylon-6,6, nylon-6, nylon-6/6,T, nylon-6,6/6,T or nylon-6/6,6 or mixtures of these.

**6.** A thermoplastic molding composition as claimed in any of claims 1 to 5, in which component D) consists of glass fibers.

**7.** A method of using a thermoplastic molding composition as claimed in any of claims 1 to 6 for producing fibers, films or shaped articles.

**8.** A shaped article obtainable from a thermoplastic molding composition as claimed in any of claims 1 to 6.

## Revendications

**1.** Masses de moulage thermoplastiques, contenant

| | |
|---|---|
| A) 5 à 97% en poids | d'un polymère thermoplastique choisi parmi le groupe des polyamides, des polyesters, des éthers de polyphénylène, des polymères vinylaromatiques ou de leurs mélanges, |
| B) 2 à 30% en poids | d'un composé d'acide alkylphosphonique de la formule I : |

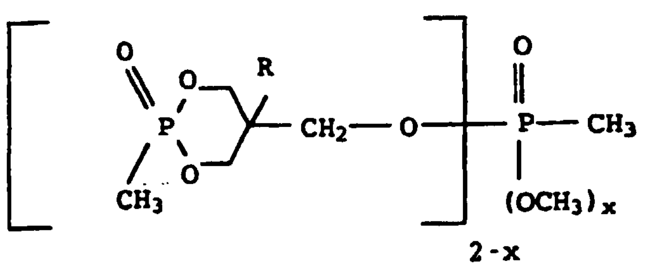

(I)

dans laquelle R représente un radical alkyle comportant 1 à 4 atomes de C et x est égal à 0 ou à 1,

| | |
|---|---|
| C) 1 à 30% en poids | d'un agent synergiste pour B) choisi parmi le groupe des composés de calcium ou de magnésium inorganiques ou de leurs mélanges, |
| D) 1 à 50% en poids | d'une matière de remplissage fibreuse, et |
| E) 0 à 40% en poids | d'autres additifs et agents auxiliaires de traitement, |

les % en poids des composants A) à E) formant chaque fois 100%.

**2.** Masses de moulage thermoplastiques suivant la revendication 1, dans lesquelles R représente un radical éthyle dans la formule I du composant B).

**3.** Masses de moulage thermoplastiques suivant l'une des revendications 1 et 2, dans lesquelles le composant C) est constitué de talc, d'hydroxyde de magnésium, de carbonate de magnésium ou de calcium ou de leurs mélanges.

**4.** Masses de moulage thermoplastiques suivant l'une des revendications 1 à 3, dans lesquelles, comme composant C), on met en oeuvre un mélange

$c_1$) d'un carbonate de magnésium-calcium de la formule générale :

$$Mg_xCa_y(CO_3)_{x+y} \cdot m\ H_2O,$$

dans laquelle x et y représentent les nombres de 1 à 5,
et $x/y \geq 1$,
et $m \geq 0$, et

$c_2$) d'un carbonate de magnésium basique de la formule générale :

$$Mg_n(CO_3)_v(OH)_{2n-2v} \cdot w\ H_2O,$$

dans laquelle n est un nombre de 1 à 6,
v est un nombre supérieur à 0 et inférieur à 6,
et $n/v > 1$,
et $w \geq 0$,

le rapport quantitatif $c_1)/c_2)$ étant de l'ordre de 1/1 à 3/1.

**5.** Masses de moulage thermoplastiques suivant l'une des revendications 1 à 4, dans lesquelles le composant A) est constitué de PA 66, PA 6, PA 6/6T, PA 66/6T ou PA 6/66 ou de leurs mélanges.

**6.** Masses de moulage thermoplastiques suivant l'une des revendications 1 à 5, dans lesquelles le composant D) est constitué de fibres de verre.

**7.** Utilisation des masses de moulage thermoplastiques suivant l'une des revendications 1 à 6, pour la fabrication de fibres, de feuilles et de corps façonnés.

**8.** Corps façonnés, que l'on peut obtenir à partir des masses de moulage thermoplastiques suivant l'une des revendications 1 à 6.